Europäisches Patentamt

European Patent Office

Office européen des brevets

(19)

(11) Veröffentlichungsnummer: **0 029 826**
**B1**

(12) **EUROPÄISCHE PATENTSCHRIFT**

(45) Veröffentlichungstag der Patentschrift: **21.12.83**

(21) Anmeldenummer: **79900795.0**

(22) Anmeldetag: **07.06.79**

(86) Internationale Anmeldenummer:
**PCT/EP79/00045**

(87) Internationale Veröffentlichungsnummer:
**WO 80/02722 11.12.80 Gazette 80/28**

(51) Int. Cl.³: **F 01 B 11/00,**
**F 01 L 25/06, F 01 L 23/00,**
**F 16 H 35/14**

(54) **DRUCKLUFTMOTOR MIT KOLBENSCHIEBERVENTIL.**

(43) Veröffentlichungstag der Anmeldung:
**10.06.81 Patentblatt 81/23**

(45) Bekanntmachung des Hinweises auf die Patenterteilung:
**21.12.83 Patentblatt 83/51**

(84) Benannte Vertragsstaaten:
**FR**

(56) Entgegenhaltungen:
**DE - A - 2 713 691**
**DE - B - 1 017 855**
**FR - A - 375 250**
**GB - A - 649 867**
**US - A - 1 661 466**
**US - A - 1 814 903**

(73) Patentinhaber: **Roser, Erich**
**Untere Mühlbachstrasse 15**
**D-7990 Friedrichshafen (DE)**

(72) Erfinder: **Roser, Erich**
**Untere Mühlbachstrasse 15**
**D-7990 Friedrichshafen (DE)**

(74) Vertreter: **Eisele, Eberhard, Dipl.-Ing.**
**Goetheplatz 7**
**D-7980 Ravensburg (DE)**

Courier Press, Leamington Spa, England.

### Druckluftmotor mit Kolbenschieberventil

Die Erfindung betrifft einen Druckluftmotor mit einem Hubkolben, einer Kolbenstange und einem parallel dazu angeordneten, doppelt schließenden einachsigen Kolbenschieberventil, dessen Schieber gegen Ende jedes Hubes des Hubkolbens von der Kolbenstange mittels einer Schnappvorrichtung umgestellt wird, wobei die Schnappvorrichtung ein Betätigungsorgan umfaßt, das beim Umschnappen zwischen zwei mit einem Längsabstand am Schieber angeordneten Anschlägen hin- und hergeht. Derartige Druckluftmotoren werden beispielsweise zum Antrieb von doppelt wirkenden Kolbenpumpen bei Hochdruck-Spritzanlagen verwendet.

Ein typischer Druckluftmotor für den erwähnten Anwendungszweck ist aus der Druckschrift "Bedienungsanleitung airless Hochdruck-Spritzanlagen" der J. Wagner GmbH., D-7990 Friedrichshafen 2, Seiten 32 und 33, bekannt. Er hat eine hohle Kolbenstange und eine in dieser koaxial verschiebbare Steuerstange, von der ein verhältnismäßig langer, den Schieber betätigender Mitnehmer rechtwinklig absteht. Der Schnappeffekt wird mit Hilfe zweier federbelasteter Schnappschieber erzielt, unter denen sich am Mitnehmer gelagerte Rollen hindurchbewegen. Dieser bekannte Druckluftmotor ist infolge seines komplizierten Aufbaus recht teuer. Außerdem hat die gewählte Konstruktion den Nachteil, daß der Mitnehmer während seines Weges von der Ruhelage zu der labilen Mittelstellung das Kolbenschieberventil völlig frei gibt. Bei einer Verkleinerung eines solchen Geräts und damit auch des Kolbenschieberventils verringert sich dessen Haftreibung derart, daß es als pneumatischer Schwinger wirkt, wenn es sich selbst überlassen wird. Das führt dazu, daß während der erwähnten Bewegungsphasen beim Umschalten der Schieber schnelle und unkontrollierbare Schwingungen ausführt und ein schnatterndes Geräusch verbreitet.

Aus der US—A—1 661 466 ist eine Schnappvorrichtung für eine Dampfmaschinen-Ventilsteuerung bekannt. Hierbei ist ein winkelförmiger Schnapphebel um eine gehäusefeste Achse drehbar, welche quer zu der durch die Mittelachsen des Schiebers und der Kolbenstange definierten Ebene steht. Ein Hebelarm bildet das Betätigungsorgan, während am anderen Arm eine an einem festen Punkt eingehängte Zugfeder angreift. Der Schnapphebel wird mittels einer Zugstange vom Kreuzkopf am Ende von dessen Bewegungsweg umgelegt, wobei jeweils die Zugfeder die Achse des Schnapphebels schneidet. Der Schnapphebel wird von seiner labilen Mittelstellung ab in einer Eigenbewegung beschleunigt und betätigt dann der Schieber schlagartig. Solange allerdings der Schnapphebel sich bei zunehmender Federspannung in seine labile Mittelstellung bewegt, bleibt auch hier der Ventilschieber sich selbst überlassen.

Die vorveröffentliche GB—A—649 867 zeigt eine Schnappvorrichtung für das Schwenkschieberventil eines druckmittelbetätigten Motors für eine Schmiervorrichtung. Zwischen dem einen Ende des Schwenkschiebers und der Kolbenstange ist eine Zugfeder ausgespannt, die bei jedem Hub die Achse des Schwenkschiebers schneidet. Hier ist jedoch nicht offenbart, daß beim Umschalten des Schwenkschiebers eine Entladung von Bewegungsenergie statt finden kann. Vielmehr wird der Schwenkschieber von der Feder nach Überschreiten der Mittelstellung unmittelbar beschleunigt, wobei eine von der Kolbenstange betätigbare Stoßplatte den Anstoß gibt.

Schließlich ist aus der FR—A—375 250 eine Umsteuervorrichtung für eine Dampfmaschine zum Antrieb von Speisewasserpumpen bekannt. Der Steuerschieber dieser Vorrichtung ist mittels eines Pleuels mit einem einarmigen Hebel verbunden und zwischen dem Verbindungsgelenk am Hebel und der Stange des Arbeitskolbens ist eine Druckfeder eingespannt. Der Umschaltvorgang läuft aber verhältnismäßig langsam ab, da die Druckfeder die beteiligten Massen unter Überwindung nicht unerheblicher Reibungswiderstände beschleunigen muß, ohne daß sich zuvor Bewegungsenergie ansammeln kann.

Der Erfindung liegt die Aufgabe zugrunde, einen einfachen, billigen und zuverlässigen Druckluftmotor vorzuschlagen, der sich insbesondere für die kleineren Baugrößen bis 60 mm Kolbendurchmesser eignet und bei dem Ventilschwingungen ausgeschlossen sind.

Diese Aufgabe wird ausgehend von einem Druckluftmotor der einleitend näher bezeichneten Art erfindungsgemäß dadurch gelöst, daß das Betätigungsorgan ein Schnapphebel ist, der um eine gehäusefeste Achse drehbar ist, welche quer zu der durch die Mittelachsen des Schiebers und der Kolbenstange definierten Ebene steht, und daß zwischen dem freien Ende des Schnapphebels und einem an der Kolbenstange befestigten Anschlußorgan wenigstens eine Zugfeder ausgespannt ist, welche bei jedem Kolbenhub die Achse des Schnapphebels schneidet. Der Schnapphebel arbeitet in der Weise, daß er jeweils so lange in seiner stabilen Endlage verbleibt und damit den Schieber am Vibrieren hindert, bis die Feder infolge der Bewegung der Kolbenstange den Schnittpunkt mit der Hebelachse gerade überwunden hat. In diesem Moment schwenkt der Schnapphebel mit zunehmenden Drehmoment in seine andere Endlage. Er schlägt unter Entladung seiner Bewegungsenergie auf dem betreffenden Anschlag des Schiebers auf und stellt damit das Kolbenschieberventil so um, daß sich an der anderen Seite des Kolbens ein Druck aufbaut, der den Rückhub einleitet.

Diese Konstruktion ist einfach, da eine massive, ungeteilte Kolbenstange verwendet werden kann und der Schnappmechanismus sich auf die Anschläge, den Schnapphebel und die Zugfedern beschränkt. Ein wesentlicher Vorteil besteht darin, daß nur geringe Massen bewegt werden und die dazu notwendigen Kräfte gering sind. Daraus folgt eine geringe Geräuschentwicklung des Umsteuermechanismus und ein geringer Verschleiß. Vor allem aber geht die Umsteuerung so schnell vor sich, daß die Druckeinbrüche der angekoppelten Kolbenpumpe in den Umsteuerpunkten vernachlässigbar sind. Bei Farbsprizvorrichtungen ergibt sich daher ohne Druckausgleichsvorrichtungen ein gleichmäßiges Spritzbild.

Die anfängliche Justierung oder spätere Nachjustierung der Motorsteuerung läßt sich wesentlich erleichtern, wenn die Anschläge, und zwar insbesondere die einzelnen Anschläge längs des Schiebers verstellbar und feststellbar sind.

Der Hebel wird vorzugsweise als zweiseitig gelagerte Kurbel ausgebildet, an deren Mittelabschnitt zwei zu beiden Seiten des Schiebers und/oder der Kolbenstange angeordnete Zugfedern angreifen. Eine solche symmetrische Anordnung wirft keinerlei Lagerprobleme auf. Die Kurbel kann außergewöhnlich billig hergestellt werden, indem man sie aus einem Draht biegt, dessen Enden nach entgegengesetzten Seiten weisende Lagerzapfen bilden.

Damit die Federn beide gleich beansprucht werden, darf sich die Kolbenstange nicht drehen. Sie sollte daher mittels einer Führungsstange in Hubrichtung geführt sein. Um angesichts des Abstandes zwischen dem Schieber und der Kolbenstange Federn von möglichst großer Länge verwenden zu können, wird in Weiterbildung der Erfindung vorgeschlagen, daß die Kurbel den Schieber umschließt und das Anschlußorgan nach der von dem Schieber abgewandten Seite der Kolbenstange weist, so daß die Zugfedern den Abstand zwischen Schieber und Kolbenstange nach beiden Seiten überragen.

Schließlich ist es zweckmäßig, die Zugfedern mit Kunststoffschläuchen zu überziehen, um einen sonst auftretenden unangenehmen Summton zu vermeiden.

Kurze Beschreibung der Zeichnung:

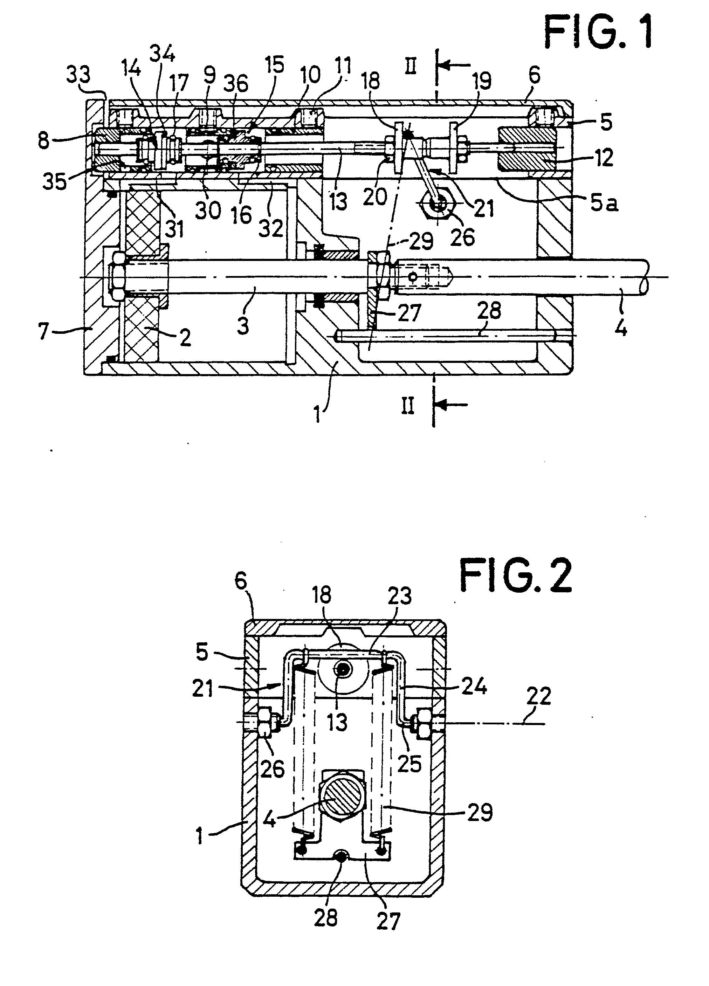

Die Zeichnung zeigt in Fig. 1 einen Längsschnitt eines Druckluftmotors und in Fig. 2 einen Querschnitt II—II.

Das dargestellte Gehäuse 1 des Druckluftmotors weist im linken Teil eine Zylinderbohrung zur Aufnahme eines Kolbens 2 auf. Eine mit diesem fest verbundene Kolbenstange 3 ist mit der Kolbenstange 4 einer nicht weiter dargestellten Hochdruckpumpe verbunden. An das Gehäuse 1 ist ein Ventilgehäuse 5 und an dieses wiederum ein Deckel 6 angesetzt. Zwischen das Gehäuse 1 und den linken Teil des Ventilgehäuses 5, welcher das nachstehend beschriebene Kolbenschieberventil aufnimmt, ist eine nicht gezeigt Flachdichtung eingelegt, welche neben der Abdichtung dieses Bereiches bewirkt, daß zwischen den rechten Teilen dieser Gehäuse 1 und 5 ringsum ein schmaler Spalt 5a verbleibt. Ein viereckiger Zylinderdeckel 7, der auch das Ventilgehäuse überdeckt und einen in den Zylinder eingreifenden runden Ansatz hat, ist stirnseitig mit dem Gehäuse 1 verbunden.

Das Ventilgehäuse 5 hat eine durchgehende Bohrung, in die drei Ventilhülsen 8, 9 und 10 dicht eingesetzt und mit Hilfe je einer radialen Klemmschraube 11 einstellbar befestigt sind. In der linken Ventilhülse 8 sowie in einer ganz rechts auf gleiche Weise im Ventilgehäuse 5 befestigten Lagerhülse 12 ist eine Schieberstange 13 gelagert. Auf dieser sind zwei Ventilkörper 14 und 15 mit Hilfe von beiderseitigen Sicherungsringen 16 befestigt. Die Ventilkörper greifen mit zwei sie umspannenden O-Ringen abwechselnd in die Ventilhülsen 8 bis 10 ein und sperren damit den Luftdurchgang ab.

In der von dem rechten Teil des Gehäuses 1 gebildeten Kammer, die durch eine entsprechende viereckige Öffnung des Ventilgehäuses 5 erweitert wird, befindet sich der Antriebsmechanismus für die Schieberstange 13 des Umsteuerventils. Der rechte Teil dieser Schieberstange hat ein Gewinde, auf das zwei Anschlagflansche 18 und 19 aufgeschraubt sind. Diese bestehen je aus einer Nabe, von der eine ringscheibenförmige Partie radial absteht. Die Anschlagflansche sind je mittels einer Kontermutter 20 gesichert.

Ein Federbügel 21 ist in den beiden Seitenwänden des Gehäuses 1 um eine Achse 22 (Fig. 2) schwenkbar gelagert. Der Federbügel ist aus Draht gebogen und besteht aus einem Mittelteil 23, zwei parallelen Schenkeln 24 und zwei rechtwinklig abgebogenen, voneinander weg weisenden Lagerzapfen 25. Diese stecken in mit der Gehäuseseitenwand verschraubten Lagerbüchsen 26. Der Federbügel 21, dessen Achse 22 zwischen der Schieberstange 13 und der Kolbenstange 4 hindurch verläuft, umschließt die Schieberstange 13 zwischen den beiden Anschlagflanschen 18 und 19.

Eine T-förmige Platte 27 ist mit ihrem breiten Mittelsteg am rechten Ende der Kolbenstange 3 angeschraubt. Die Kolbenstange hat hierzu einen Ansatz, an den die Platte 27 von einer Schraubenmutter angedrückt wird, so daß sie radial zur Kolbenstange absteht. Eine halbrunde Ausnehmung der Platte 27 übergreift eine im unteren Teil des Gehäuses 1 parallel zur Kolbenstange 3 angeordnete Führungsstange 28, so daß sich die Platte 27 nur axial bewegen, aber nicht drehen kann. Zwei Zugfedern 29, über die je ein nicht dargestellter Kunststoffschlauch gesteckt ist, sind zwischen dem Mittelteil 23 des Federbügels und der Platte 27 ausgespannt. Die Anordnung ist so getroffen, daß diese Zugfedern 29 links und rechts der Schieberstange 13 sowie der Kolbenstange 4 verlaufen, in Bohrungen an den Enden des Querschenkels der Platte 28 eingehängt und mit Hilfe von kleinen Kröpfungen oder Kerben am Federbügel 21 gegen seitliches Verschieben gesichert sind.

Der Druckluftmotor arbeitet wie folgt: In der gezeigten Stellung ist der Federbügel 21 gerade nach links geschnappt, so daß die durch eine Bohrung 30 in den Mittelabschnitt des Ventilinnenraums mündende Druckluftzuleitung über einen Verbindungskanal 31 mit der linken Zylinderkammer verbunden ist. Der Kolben 2 bewegt sich nun nach rechts und stößt die in der rechten Zylinderkammer enthaltene Luft über einen Verbindungskanal 32 und durch die Ventilhülse 10 in die rechte Gehäusekammer. Von dort entweicht die Abluft teils durch den Spalt 5a, teils streicht sie unter dem Deckel 6 nach links und verläßt das Gehäuse durch einen Spalt 33, den dieser Deckel mit dem Zylinderdeckel 7 bildet.

Mit dem Kolben bewegt sich die Platte 27 nach rechts und nimmt die unteren Enden der Zugfedern 29 mit. Dabei ändert die auf den Mittelteil 23 des Federbügels 21 wirkende Zugkraft ihre Richtung bis diese Zugkraft schließlich genau auf die Achse 22 des Federbügels zielt. Jetzt bebindet sich der Federbügel in einer labilen Stellung, so daß er bei der geringsten Weiterbewegung des Kolbens 2 in einer Schnappbewegung nach rechts schwenkt. Schnappbewegung deshalb, weil das von den Zugfedern 29 auf den Federbügel 21 ausgeübte Drehmoment bei der Schwenkbewegung des Federbügels nach rechts ständig zunimmt. Der Federbügel schlägt dann mit seinem Mittelteil am Anschlagflansch 19 an und nimmt die Schieberstange 13 ruckartig nach rechts so weit mit, bis ein am linken Ventilkörper 14 angeordneter Anschlagring 34 an der linken Stirnfläche der mittleren Ventilhülse 9 anschlägt. Damit ist die Umstellung des Kolbenschieberventils vollzogen. Die Druckluft tritt jetzt durch den Verbindungskanal 32 in die rechte Zylinderkammer ein, während die linke Zylinderkammer über den Kanal 31, eine Radialbohrung 35 der linken Ventilhülse 8 und einen aus der Zeichnung nicht ersichtlichen Längskanal mit der erwähnten Kammer im rechten Teil des Gehäuses verbunden ist.

Die Bewegung des Kolbens 2 nach links und der damit einhergehende Umschnappvorgang verläuft entsprechend. Die Bewegung der Schieberstange wird dabei begrenzt durch einen Anschlagring 36 des rechten Ventilkörpers 15, der an der rechten Stirnseite der mittleren Ventilhülse 9 anschlägt.

Der Druckluftmotor macht bis zu etwa 200 Hübe, d.h. Hin- und Hergänge, je Minute. Dabei kommen die Zugfedern 29 in saitenartige Schwingbewegungen, die jedoch durch die übergezogenen Kunststoffschläuche stark gedämpft werden. Der Druckluftmotor ist insgesamt außergewöhnlich geräuscharm, was besonders auch auf die schalldämpfende Wirkung der Gehäusekammer in Verbindung mit den langen aber schmalen Auslaßschlitzen 5a und 33 zurückzuführen ist. Bei entsprechend geringem Durchmesser des Kolbens einer angekoppelten Hochdruck-Kolbenpumpe können mit einem Antriebsluftdruck von 8 Bar Pumpdrücke bis zu 200 Bar erreicht werden, beispielsweise zum luftlosen Versprühen von Farbe oder Kunststoffen oder auch für hydraulische Zwecke.

**Patentansprüche**

1. Druckluftmotor mit einem Hubkolben (2), einer Kolbenstange (3) und einem parallel dazu angeordneten, doppelt schließenden einachsigen Kolbenschieberventil, dessen Schieber (13) gegen Ende jedes Hubes des Hubkolbens (2) von der Kolbenstange (3) mittels einer Schnappvorrichtung umgestellt wird, wobei die Schnappvorrichtung ein Betätigungsorgan umfaßt, das beim Umschnappen zwischen zwei mit einem Längsabstand am Schieber (13) angeordneten Anschlägen (18, 19) hin- und hergeht, dadurch gekennzeichnet, daß das Betätigungsorgan ein Schnapphebel (21) ist, der um eine gehäusefeste Achse (22) drehbar ist, welche quer zu der durch die Mittelachsen des Schiebers (13) und der Kolbenstange (3) definierten Ebene steht, und daß zwischen dem freien Ende (23) des Schnapphebels (21) und einem an der Kolbenstange befestigten Anschlußorgan (27) wenigstens eine Zugfeder (29) ausgespannt ist, welche bei jedem Kolbenhub die Achse (22) des Schnapphebels schneidet.

2. Druckluftmotor nach Anspruch 1, dadurch gekennzeichnet, daß ein einziges, den Hubkolben (2) und das Kolbenschieberventil umschließendes Gehäuse (1) vorgesehen und der Schnapphebel als direkt in diesem Gehäuse zweiseitig gelagerte Kurbel (21) ausgebildet ist.

3. Druckluftmotor nach Anspruch 2, dadurch gekennzeichnet, daß die Kurbel (21) aus Draht gebogen ist, dessen Enden nach entgegengesetzten Seiten weisende Lagerzapfen (25) bilden, und daß zu beiden Seiten des Schiebers (13) angeordnete Zugfedern (29) am Mittelabschnitt (23) der Kurbel angreifen.

4. Druckluftmotor nach einem der vorhergehenden Ansprüche, dadurch gekennzeichnet, daß die Kurbel (21) den Schieber (13) umschließt und das Anschlußorgan (27) nach der von dem Schieber abgewandten Seite der Kolbenstange (3) weist, daß der Anschlußorgan (27) mittels einer sich in Hubrichtung erstreckenden Führungsstange (28) gegen Drehung um die Kolbenstangenachse gesichert ist und daß die Anschläge (18, 19) als einzelne auf den Schieber (13) aufschraubbare und durch Kontermuttern (20) gesicherte Scheiben ausgebildet sind.

5. Druckluftmotor nach einem der vorhergehenden Ansprüche, dadurch gekennzeichnet, daß die Zugfedern (29) mit Kunststoffschläuchen überzogen sind.

## Revendications

1. Motor pneumatique comportant un piston (2), une tige de piston (3) et un tiroir à un seul axe et à double fermeture agencé parallèlement à ladite tige de piston, tiroir dont le coulisseau (13) est inversé à l'extrêmité de chaque course du piston (2) par la tige de piston (3) par l'intermédiaire d'un dispositif d'inversion, qui comporte un organe d'actionnement animé d'un mouvement de va-et-vient entre deux butées (18, 19) écartées longitudinalement l'une de l'autre et agencées sur le tiroir (13), caractérisé en ce que ledit organe d'actionnement est constitué par un levier basculant (21), pouvant tourner autour d'un axe (22) solidaire du boitier et transversal au plan défini par les axes médians du coulisseau (13) et de la tige de piston (3) et en ce que, entre l'extrêmité libre (23) du levier basculant (21) et un organe de liaison (27) relié à la tige de piston, est tendu au moins un ressort de traction (29), qui, à chaque course du piston, coupe l'axe (22) du levier basculant.

2. Moteur pneumatique selon la revendication 1, caractérisé en ce qu'il comporte un boitier unique (1) enveloppant le piston (2) et le tiroir et en ce que le levier basculant est conformé directement dans ce boitier à la forme d'une manivelle (21) tourillonnée des deux côtés.

3. Moteur pneumatique selon la revendication 2, caractérisé en ce que la manivelle (21) est constituée d'un rond plié, dont les extrêmités forment des tourillons opposés (25) et en ce que des ressorts de traction (29) agencés des deux côtés du coulisseau (13) prennent appui sur la partie intermédiaire (23) de la manivelle.

4. Moteur pneumatique selon l'une quelconque des revendications précédentes, caractérisé en ce que la manivelle (21) encadre le coulisseau (13) et l'organe de liaison (27) se trouve du côté de la tige de piston (3) opposé au tiroir, en ce que ledit organe de liaison (27) est empêché de tourner autour de la tige de piston par l'intermédiaire d'une tige de guidage (28) parallèle à la course du piston et en ce que les butées (18, 19) sont formées par des disques vissés individuellement sur le coulisseau (13) et bloqués par des contre-écrous (20).

5. Moteur pneumatique selon l'une quelconque des revendications précédentes, caractérisé en ce que les ressorts de traction (29) sont revêtus de manchons de matière synthétique.

## Claims

1. Compressed-air motor with a reciprocating piston (2), a piston rod (3) and a double closing uniaxial piston slide valve arranged parallel thereto, the slide (13) of which is reversed towards the end of each stroke of the reciprocating piston (2) by the piston rod (3) by means of a snap device, whilst the snap device comprises an actuating element which moves in reciprocation between two stops (18, 19) arranged with a longitudinal interval on the slide (13), characterized in that the actuating element consists of a snap lever (21) rotatable about an axle (22) integral with the housing which is oriented transversely to the plane defined by the median axes of the slide (13) and of the piston rod (3), and that between the free end (23) of the snap lever (21) and a connecting member (27) fixed to the piston rod (3) there is tensioned at least one traction spring (29) which intersects the axis (22) of the snap lever at each piston stroke.

2. Compressed-air motor according to claim 1, characterized in that it comprises a single housing (1) enclosing the reciprocating piston (2) and the piston slide valve and that the snap lever is formed as a crank (21) mounted on two sides directly in that housing.

3. Compressed-air motor according to claim 2, characterized in that the crank (21) is bent from wire, the ends of which form journals (25) pointing to opposite sides, and that the median section (23) of the crank is attacked by two traction springs (29) arranged on the two sides of the slide (13).

4. Compressed-air motor according to one of the preceding claims, characterized in that the crank (21) encloses the slide (13) and the connecting member (27) points towards that side of the piston rod (3) remote from the slide, that the connecting member (27) is secured against rotation about the piston rod axis by means of a guide rod (28) extending in the stroke direction, and that the stops (18, 19) consist of discs screwable onto the slide (13) and secured by check-nuts (20).

5. Compressed-air motor according to one of the preceding claims, characterized in that the traction springs (29) are covered with plastics tubes.

0 029 826

FIG. 1

FIG. 2